(19) Europäisches Patentamt
European Patent Office
Office européen des brevets

(11) **EP 3 390 012 B1**

(12) **EUROPEAN PATENT SPECIFICATION**

(45) Date of publication and mention
of the grant of the patent:
**30.09.2020 Bulletin 2020/40**

(51) Int Cl.:
*B29C 67/00* (2017.01)    *B33Y 50/02* (2015.01)
*B33Y 30/00* (2015.01)    *B33Y 40/00* (2020.01)
*B29C 64/264* (2017.01)

(21) Application number: **16901853.8**

(22) Date of filing: **12.05.2016**

(86) International application number:
**PCT/US2016/032080**

(87) International publication number:
**WO 2017/196339 (16.11.2017 Gazette 2017/46)**

(54) **FUSE LAMP CALIBRATION**

SICHERUNGSLAMPENKALIBRIERUNG

ÉTALONNAGE DE LAMPE À FUSIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.10.2018 Bulletin 2018/43**

(73) Proprietor: **Hewlett-Packard Development Company, L.P.**
**Spring TX 77389 (US)**

(72) Inventors:
• **DE PENA, Alejandro Manuel**
**08174 Sant Cugat del Valles (ES)**
• **CASALDALIGA ALBISU, Marcos**
**08174 Sant Cugat del Valles (ES)**

• **COMAS, Esteve**
**08174 Sant Cugat delValles (ES)**

(74) Representative: **Haseltine Lake Kempner LLP**
**Redcliff Quay**
**120 Redcliff Street**
**Bristol BS1 6HU (GB)**

(56) References cited:
**WO-A1-2015/108555    WO-A1-2015/155745**
**WO-A1-2016/049621    WO-A1-2016/050319**
**WO-A1-2016/050322    WO-A1-2016/050322**
**US-A1- 2004 104 499    US-A1- 2008 262 659**
**US-A1- 2014 314 613    US-A1- 2016 082 668**

**Description**

Background

Additive manufacturing systems can manufacture three-dimensional (3-D) objects by utilizing a mechanism of successively depositing a material to build up a three-dimensional (3-D) object. The additive manufacturing mechanism can include depositing printing agents onto a build material to effect the build up of the 3-D object. 3-D printers can utilize such a mechanism to additively manufacture 3-D objects. 3-D printed objects can be additively manufactured based on a three-dimensional object model.
US 2008/262659 A1 describes methods and systems for controlling and adjusting heat distribution over a part bed. WO 2015/155745 A1 describes a method and system for adjusting a heat of a carriage.

Brief Description of the Drawings

Figure 1 illustrates a diagram of an example of a system for fuse lamp calibration according to the present disclosure.
Figure 2 illustrates a diagram of an example of a computing device according to the present disclosure.
Figure 3 illustrates a diagram of an example of a system for fuse lamp calibration according to the present disclosure.
Figure 4 illustrates a diagram of an example of thermal images for fuse lamp calibration according to the present disclosure.
Figure 5 illustrates a diagram of an example of a graphical representation of surface flux for fuse lamp calibration according to the present disclosure.
Figure 6 illustrates a flow chart of an example of a method of fuse lamp calibration according to the present disclosure.

Detailed Description

The present invention, according to claims 1, 7 and 13, relates to systems, devices, and computer readable medium for fuse lamp calibration. In one example, a system for a fuse lamp calibration includes a carriage comprising a heat source to apply heat over a print bed, a heat sensor to capture thermal data of the print bed, and a computing device coupled to the heat sensor to determine a surface flux of the print bed and calibrate the heat source based on the surface flux of the print bed. In some examples, the systems, devices, and computer readable medium for fuse lamp calibration can be utilized to ensure that a plurality of heat sources are applying a substantially equal quantity of energy to a print bed. For example, two fuse lamps can be coupled to the carriage. In this example, the two fuse lamps can be used based on a direction of travel of the carriage to support bi-directional printing. In this example, the fuse lamp calibration can be utilized to calibrate the two fuse lamps to enable the two fuse lamps to each apply a substantially equal quantity of energy to the print bed. In some examples, systems, devices, and computer readable medium for fuse lamp calibration can also be utilized to determine power degradation of the plurality of heat sources and/or determine when obstructions (e.g., dust, dirt, building material, etc.) exist between the plurality of heat sources and the print bed.

In some examples, the systems, devices, and computer readable medium described herein can be utilized with additive manufacturing techniques or devices such as three-dimensional (3-D) printing devices. The 3-D printing devices can utilize printheads coupled to the carriage to deposit a printing agent on a print bed (e.g., build area). A printing agent can be an agent that modulates energy absorption of a different material such as a build material and/or transforms the properties of the different material. In some examples, the printing agent can cause a fusing through an absorption of energy. In some examples, the printing agent can reduce an effect of thermal bleed. The build material can be a material that can be transformed into the 3-D object. In some examples, the build material can be a powder, a paste, a gel, and/or a slurry. The build material can be, for example, a thermoplastic powder, which can melt and then solidify. For example, the printing agent can include a fusing agent that acts as an energy absorber to transfer an increased quantity of applied energy to the second material relative to untreated build material. In an example, the fusing agent can be a liquid material that absorbs radiation applied by an energy source of the additive manufacturing device (e.g., absorbs particular wavelengths of radiation applied from a heat source, which can be within and/or outside of the visible spectrum). The fusing agent can, in an example, be a dark colored (e.g., black) thermal absorber and/or a colorless thermal absorber (e.g., Ultraviolet (UV) absorbers). The printing agent can also include energy absorption retarding printing agents and/or a moderating printing agent that modifies a degree of coalescence of the build material.

In some examples, the carriage can include a number of heat sources (e.g., fuse lamps, infrared lamps, microwave lamps, etc.). The 3-D printing device can solidify portions of the build material by applying energy (e.g., heat energy, radiation energy, radiated energy, etc.) to the material. For example, the device can apply energy to the build material in order to cause the build material to fuse or sinter (e.g., to melt, coalesce, and solidify from powder). The energy can be applied from a heat source. For example, the energy can be applied by a lamp (e.g., an overhead lamp, an array of near infrared lamps, an array of near infrared lamps situated above the build area). In another example, the energy can be applied by a fuse lamp coupled to a carriage. In some examples, the carriage (e.g., additive manufacturing device, etc.) can be moved over the print bed to apply the energy and/or the printing agent.

The energy applied by the lamps can be selectively absorbed by portions of the build material. For example, the portions of the build material treated with a printing agent such as a fusing agent (e.g., portions of the build material upon which printing agent has been deposited) can, by virtue of the energy absorptive properties of the agent and/or other agent properties, absorb comparatively more of the applied energy than build material on which no fusing agent was applied. The areas of build material treated with the printing agent can reach a temperature (e.g., a melting point) causing the material to melt in order to eventually coalesce and/or solidify. The print bed can index (e.g., move in a z-axis where the x-axis corresponds to a first dimension, a y-axis corresponds to a second dimension, and the z-axis corresponds to a third dimension) and allow a new layer of build material to be spread and repeat the process, building a 3-D object one layer at a time.

In some examples, it can be the systems and method described herein can equalize the energy applied by each of a plurality of heat sources (e.g., fuse lamps) coupled to the carriage. For example, the systems and methods described herein can ensure that each of the plurality of heat sources is applying a substantially equal quantity of energy to the print bed. In this example, ensuring that the plurality of heat sources are applying a substantially equal quantity of energy to the print bed can lower a chance of defects occurring within the 3-D object being formed. For example, failing to ensure that the plurality of heat sources are applying a substantially equal quantity of energy to the print bed can result in a 3-D object not being additively manufactured as intended.

The defects can include too much coalesced and solidified build material, not enough coalesced and solidified build material, improper density of coalesced and solidified build material, an incorrect degree of calescence and/or solidification, among other types of defects. For example, non-uniformity in energy delivery can result in part warpage, poor object qualities, poor surface properties of the object, poor accuracy, poor object strength, poor inter-layer bonding, among other types of defects. These defects can render an additive manufacturing device unsuitable for creating particular 3-D objects, it can limit the resolution of the device, and it can add time and materials to the additive manufacturing process.

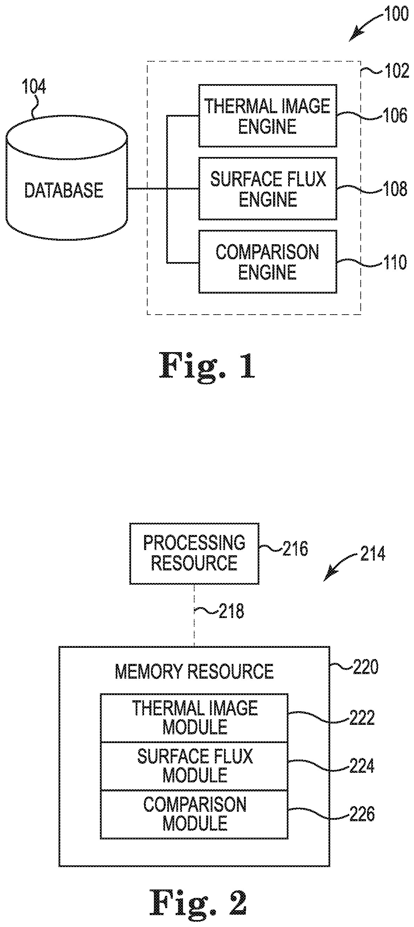

Figure 1 illustrates a diagram of an example of a system 100 for fuse lamp calibration according to the present disclosure. The system 100 can include a database 104, a calibration manager 102, and/or a number of engines (e.g., thermal image engine 106, surface flux engine 108, comparison engine 110). The calibration manager 102 can be in communication with the database 104 via a communication link, and can include the number of engines (e.g., thermal image engine 106, surface flux engine 108, comparison engine 110). The calibration manager 102 can include additional or fewer engines than are illustrated to perform the various functions as will be described in further detail.

The number of engines (e.g., thermal image engine 106, surface flux engine 108, comparison engine 110) can include a combination of hardware and programming, but at least hardware, that is to perform functions described herein (e.g., determine a surface flux of the print bed for the period of time, receive a plurality of thermal images of a print bed over a first period of time and a second period of time, determine a first surface flux of the print bed for a first carriage cycle using a first heat source and a second surface flux of the print bed for a second carriage cycle using a second heat source, wherein the first carriage cycle is within the first period of time and the second carriage cycle is within the second period of time, compare the first surface flux to the second surface flux to determine a difference in radiated energy provided to the print bed between the first heat source and the second heat source, etc.) as well as hard-wired programs (e.g., logic).

The thermal image engine 106 can include hardware and/or a combination of hardware and programming, but at least hardware, to receive a plurality of thermal images of a print bed over a first period of time and a second period of time. In some examples, the thermal image engine 106 can receive thermal images from a heat sensor (e.g., sensor that can capture thermal images, thermal camera, etc.). In some examples, the thermal images can be received from a thermal camera coupled to a 3-D printing device. For example, a 3-D printing device can utilize an overhead thermal imaging camera that can capture thermal images of the print bed. In some examples, the thermal imaging camera can be positioned above the carriage of the 3-D printing device. In these examples, the thermal imaging camera can capture thermal images of the print bed when the carriage is not between the thermal imaging camera and the print bed.

The surface flux engine 108 can include hardware and/or a combination of hardware and programming, but at least hardware, to determine a first surface flux of the print bed for a first carriage cycle using a first heat source and a second surface flux of the print bed for a second carriage cycle using a second heat source, wherein the first carriage cycle is within the first period of time and the second carriage cycle is within the second period of time. As used herein, a carriage cycle can include a pass of the carriage over the print bed. In some examples, the carriage cycle can be a calibration carriage cycle. A calibration carriage cycle can include carriage cycles during a calibration of the fuse lamps as described herein. In some examples, the calibration carriage cycle can be a carriage cycle during production of the sacrificial layers of the print bed. In some examples, the carriage cycle can be a build carriage cycle. The build carriage cycle can include a carriage cycle during the generation of a 3-D object. In some examples, the calibration carriage cycle can be a different speed as the build carriage cycle. In some examples, the speed of the build carriage cycle can be altered based on a difference in radiated energy (e.g., heat energy, infrared energy, etc.) provided to the print bed between the first heat source and the second heat source.

As used herein, the surface flux corresponds to a quantity of heat received on a surface of the print bed over the period of time. As described herein, the carriage can pass over the print bed and apply heat via a number of heat sources and/or deposit a printing agent via a number of print heads. In some examples, the period of time can be the time it takes the carriage to move from a first side of the print bed to the second side of the print bed. In some examples, the print bed can be divided into a number of print bed portions. In these examples, each of the number of print bed portions can be individually analyzed for each carriage cycle using the thermal images captured during the first period of time and the second period of time respectively.

The comparison engine 110 can include hardware and/or a combination of hardware and programming, but at least hardware, to compare the first surface flux to the second surface flux to determine a difference in radiated energy (e.g., heat energy, infrared energy, etc.) provided to the print bed between the first heat source and the second heat source. As used herein, the surface flux of the print bed can generate a temperature fluctuation of the print bed surface over a period of time that includes the carriage cycle. In some examples, the surface flux can include a temperature fluctuation of the print bed surface over a period of time that begins prior to the carriage cycle and ends when the temperature of the print bed surface has returned to a particular temperature (e.g., temperature prior to the carriage cycle, room temperature, etc.).

In an example, the system 100 can comprise a 3-D printing device. For example, a 3-D printer can cause to be executed and/or execute a number of engines (e.g., thermal image engine 106, surface flux engine 108, comparison engine 110). The 3-D printing device can execute the system 100 utilizing integral, ancillary, and/or separate software, hardware, firmware, and/or logic to perform functions described herein.

Figure 2 illustrates a diagram of an example of a computing device 214 according to the present disclosure. The computing device 214 can utilize software, hardware, firmware, and/or logic to perform functions described herein.

The computing device 214 can be any combination of hardware and program instructions to share information. The hardware, for example, can include a processing resource 216 and/or a memory resource 220 (e.g., non-transitory computer-readable medium (CRM), machine readable medium (MRM), database, etc.). A processing resource 216, as used herein, can include any number of processors capable of executing instructions stored by a memory resource 220. Processing resource 216 can be implemented in a single device or distributed across multiple devices. The program instructions (e.g., computer readable instructions (CRI)) can include instructions stored on the memory resource 220 and executable by the processing resource 216 to implement a desired function (e.g., determine a surface flux of the print bed for the period of time, receive a plurality of thermal images of a print bed over a first period of time and a second period of time, determine a first surface flux of the print bed for a first carriage cycle using a first heat source and a second surface flux of the print bed for a second carriage cycle using a second heat source, wherein the first carriage cycle is within the first period of time and the second carriage cycle is within the second period of time, compare the first surface flux to the second surface flux to determine a difference in radiated energy provided to the print bed between the first heat source and the second heat source, etc.).

The memory resource 220 can be in communication with the processing resource 216 via a communication link (e.g., a path) 218. The communication link 218 can be local or remote to a machine (e.g., a computing device) associated with the processing resource 216. Examples of a local communication link 218 can include an electronic bus internal to a machine (e.g., a computing device) where the memory resource 220 is one of volatile, non-volatile, fixed, and/or removable storage medium in communication with the processing resource 216 via the electronic bus.

A number of modules (e.g., thermal image module 222, surface flux module 224, comparison module 226, etc.) can include CRI that when executed by the processing resource 216 can perform functions. The number of modules (e.g., thermal image module 222, surface flux module 224, comparison module 226, etc.) can be sub-modules of other modules. For example, the thermal image module 222 and the surface flux module 224 can be sub-modules and/or contained within the same device. In another example, the number of modules (e.g., thermal image module 222, surface flux module 224, comparison module 226, etc.) can comprise individual modules at separate and distinct locations (e.g., CRM, etc.).

Each of the number of modules (e.g., thermal image module 222, surface flux module 224, comparison module 226, etc.) can include instructions that when executed by the processing resource 216 can function as a corresponding engine as described herein. For example, the thermal image module 222, surface flux module 224, and comparison module 226 can include instructions that when executed by the processing resource 216 can function as the thermal image engine 106, the surface flux engine 108, and the comparison engine 110, respectively.

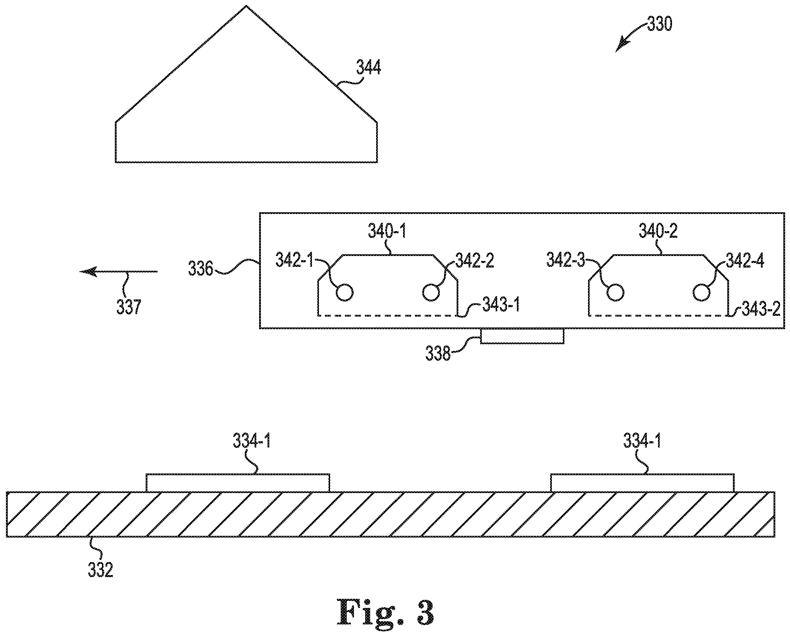

Figure 3 illustrates a diagram of an example of a system 330 for fuse lamp calibration according to the present disclosure. In some examples, the system 330 can be an additive manufacturing system such as three-dimensional (3-D) printing system. In some examples, the system 330 can be coupled to a computing device such as computing device 214 as referenced in Figure 2.

In some examples, the system 330 can include a print bed 332. As described herein, the print bed 332 can include a build material such as a thermoplastic powder during a build session, which can melt and then solidify based on a quantity of energy applied to the print bed 332. For example, the build material can be melted by applying heat energy to the print bed 332 utilizing a number of heat source enclosures 340-1, 340-2 coupled (e.g., housed within a carriage 336, enclosed within a carriage 336, etc.) to a carriage 336. In some examples, the number of heat source enclosures 340-1, 340-2 can be removed (e.g., moved away from the print bed 332, etc.) from the print bed 332 by moving the carriage 336 and the build material can be allowed to cool in order to form 3-D objects as described herein.

In some examples, the system can include a carriage 336 that can be moved over the print bed 332 and/or moved away from the print bed 332. For example, the carriage 336 can move in a direction of arrow 337. In some examples, the carriage 336 can include a number of heat source enclosures 340-1, 340-2 can each include a number of fuse lamps 342-1, 342-2, 342-3, 342-4 (e.g., heat sources, infrared heat lamps, etc.). In some examples, the number of heat source enclosures 340-1, 340-2 that can be positioned on different sides of the carriage 336. For example, the heat source enclosure 340-1 can be positioned on a first end of the carriage 336 and the heat source enclosure 340-2 can be positioned on a second end of the carriage 336.

As described herein, the first heat source enclosure 340-1 and the second heat source enclosure 340-2 can apply substantially equal heat energy to the surface of the print bed. For example, fuse lamps 342-1, 342-4 can be used based on a direction of travel of the carriage 336 to support bi-directional printing. In this example, the fuse lamp calibration can be utilized to calibrate the fuse lamps 342-1, 342-4 to enable the fuse lamps 342-1, 342-4 to each apply a substantially equal quantity of energy to the print bed 332. For example, defects in the 3-D object being formed can occur when the first heat source enclosure 340-1 is applying a different quantity of energy to the surface of the print bed 332 compared to the second heat source enclosure 340-2. In another example, defects in the 3-D object being formed can occur when the number of fuse lamps 342-1, 342-2, 342-3, 342-4 apply a different quantity of energy to the surface of the print bed 332. For example, defects in the 3-D object being formed can occur when the difference in the quantity of energy applied to the surface of the print bed 332 between one or more of the number of fuse lamps 342-1, 342-2, 342-3, 342-4 is outside a threshold value (e.g., calibration threshold, etc.). In some examples, each of the number of fuse lamps 342-1, 342-2, 342-3, 342-4 are calibrated individually and compared to each of the other number of fuse lamps 342-1, 342-2, 342-3, 342-4 to determine when a particular fuse lamp is outside a threshold value for the number of fuse lamps 342-1, 342-2, 342-3, 342-4. In some examples, the system 330 can determine a thermal behavior (e.g., quantity of radiated energy provided to the print bed 332, degradation of the fuse lamp, etc.) of the number of fuse lamps 342-1, 342-2, 342-3, 342-4.

In some examples, the system 330 can include a heat sensor 344 that is positioned above the carriage 336. In some examples, the heat sensor 344 can include a thermal imaging device that can capture thermal images of the print bed 332. In some examples, the heat sensor 344 can be utilized to determine a quantity of energy delivered to or absorbed by the surface of the print bed 332 during the generation of a 3-D object. For example, the heat sensor 344 can be utilized to capture thermal images of the print bed 332 for altering an energy provided to a number of overhead heat lamps (not shown). In some examples, the number of overhead heat lamps can be utilized to maintain a surface temperature of the print bed 332 during the generation of the 3-D object.

As described herein, the carriage 336 can move horizontally above the print bed 332 in the direction of arrow 337 to apply radiated energy to the print bed 332 utilizing the number of fuse lamps 342-1, 342-2, 342-3, 342-4. In some examples, the quantity of radiated energy applied to the surface of the print bed 332 can be based on the quantity of radiated energy or power of radiated energy that is distributed by each of the number of fuse lamps 342-1, 342-2, 342-3, 342-4 and a speed of the carriage 336 moving over the print bed 332. For example, a greater quantity of radiated energy can be distributed by each of the number of fuse lamps 342-1, 342-2, 342-3, 342-4 and can result in a greater quantity of radiated energy being applied to the surface of the print bed 332. In another example, a slower rate of speed by the carriage 336 can result in a greater quantity of radiated energy being applied to the surface of the print bed 332. Conversely, a lower quantity of heat or power of radiated energy distributed by each of the number of fuse lamps 342-1, 342-2, 342-3, 342-4 and/or a greater speed of the carriage 336 moving over the print bed 332 can result in a lower quantity of radiated energy being applied to the surface of the print bed 332. In some examples, the heat distributed by each of the number of fuse lamps 342-1, 342-2, 342-3, 342-4 and/or the speed of the carriage 336 moving over the print bed 332 can be altered to calibrate the quantity of radiated energy being applied to the surface of the print bed 332.

In some examples, each of the number of fuse lamps 342-1, 342-2, 342-3, 342-4 can be calibrated individually to ensure that the energy distributed by each of the number of fuse lamps 342-1, 342-2, 342-3, 342-4 is within a threshold value. For example, the fuse lamp 342-1 can be activated and fuse lamps 342-2, 342-3, 342-4 can be deactivated. In this example, the carriage 336 can pass over the print bed 332 (e.g., perform a calibration carriage cycle) in the direction of arrow 337 while the fuse lamp 342-1 is activated. In this example, the heat sensor 344 can capture thermal images of the print bed 332 during a carriage cycle of the carriage 336. In this example, the thermal images can be utilized to determine energy absorbed by the print bed 332 and/or energy distributed by the fuse lamp 342-1. In this example, the process of activating a single fuse lamp of the number of fuse lamps 342-1, 342-2, 342-3, 342-4 can be repeated to capture thermal images for each of the number of fuse lamps 342-1, 342-2, 342-3, 342-4. In this example, the thermal images for each of the number of fuse lamps 342-1, 342-2, 342-3, 342-4 can be utilized to determine energy absorbed by the print bed 332 and/or energy distributed by each of the fuse lamps 342-1, 342-2, 342-3, 342-4 to determine whether each of the number of fuse lamps 342-1, 342-2, 342-3, 342-4 are equally distributing radiated energy to the print bed 332 within a threshold value. In some examples, the threshold value can be a deviation value between each of the number of fuse lamps 342-1, 342-2, 342-3, 342-4.

In some examples, the thermal images corresponding for each of the number of fuse lamps 342-1, 342-2, 342-3, 342-4 can be compared to determine a difference in radiated energy provided to the print bed 332 between a first fuse lamp and a second fuse lamp. As described herein, the difference in radiated energy provided to the print bed 332 can be compared to a threshold value to determine when the first fuse lamp and the second fuse lamp are providing a substantially equal quantity of energy to the print bed 332. When the difference in radiated energy provided to the print bed 332 is greater than the threshold value a number of alterations to the system 330 can be performed. In some examples, the number of alterations can include: providing a greater quantity of electrical energy to one or more of the number of fuse lamps 342-1, 342-2, 342-3, 342-4, providing a lower quantity of electrical energy to one or more of the number of fuse lamps 342-1, 342-2, 342-3, 342-4, increasing a speed of the carriage 336 moving over the print bed 332, decreasing a speed of the carriage 336 moving over the print bed, cleaning a number of windows 343-1, 343-2 of the heat source enclosures 340-1, 340-2, replacing one or more of the number of fuse lamps 342-1, 342-2, 342-3, 342-4, among other alterations to substantially equalize the radiated energy provided to the print bed 332 by the number of fuse lamps 342-1, 342-2, 342-3, 342-4. In some examples, the print bed 332 can comprises a substantially homogenous color across a surface of the print bed 332. For example, the print bed 332 can comprise the sacrificial layers of building material as described herein. In this example, the sacrificial layers of building material can be substantially the same color and/or have substantially the same thermal absorption properties across the surface of the print bed 332. As used herein, the sacrificial layers of building material can be deposited as part of an initial process of the 3-D printer to allow the building material (e.g., powder) to go through a transient state in temperature and enter a stationary state prior to building a 3-D object as described herein.

In some examples, the carriage 336 can include a number of print heads 338 (e.g., print nozzles, printing agent distributors, etc.) that can deposit a printing agent as described herein. In some examples, the print heads 338 can deposit a first printing agent 334-1 on the print bed 332 and a second printing agent 334-2 on the print bed 332. In some examples, the first printing agent 334-1 and the second printing agent 334-2 can be different types of printing agent. In some examples, the different types of printing agent can be different colors and/or absorb energy from the number of fuse lamps 342-1, 342-2, 342-3, 342-4 at a different rate. In some examples, the print bed surface 332, the first printing agent 334-1, and the second printing agent 334-2 can each absorb energy from the number of fuse lamps 342-1, 342-2, 342-3, 342-4 at a different rate.

In some examples, the first printing agent 334-1 and the second printing agent 334-2 can be deposited by the print heads 338. In some examples, the first printing agent 334-1 and the second printing agent 334-2 can be part of a calibration plate that can be placed on the print bed 332. In some examples, the calibration plate can include a number of different colors that can absorb energy from the number of fuse lamps 342-1, 342-2, 342-3, 342-4 at a different rate. In some examples, the first printing agent 334-1 and the second printing agent 334-2 can be utilized to calibrate the number of fuse lamps 342-1, 342-2, 342-3, 342-4 for a number of different colors and/or a number of different printing agent types. In these examples, the different colors and/or different printing agent types can help calibrate the number of fuse lamps 342-1, 342-2, 342-3, 342-4 for each of the different colors and/or for each of the different printing agent types.

In some examples, the system 330 can be utilized to determine a degradation of each of the number of fuse lamps 342-1, 342-2, 342-3, 342-4. In some examples, the thermal images captured by the heat sensor 344 can be stored as historical thermal images and/or compared to subsequent thermal images for the same fuse lamp. For example, thermal images can be captured by the heat sensor 344 during a first carriage cycle when fuse lamp 342-2 is activated and fuse lamps 342-1, 342-3, 342-4 are deactivated. In this example, thermal images can be captured by the heat sensor during a second carriage cycle when fuse lamp 342-2 is activated and fuse lamps 342-1, 342-3, 342-4 are deactivated. In this example, the degradation of fuse lamp 342-2 can be determined based on a decrease in energy absorbed by the print bed 332.

As described herein, the degradation of the number of fuse lamps 342-1, 342-2, 342-3, 342-4 can lead to inconsistent heating and/or a difference in energy distributed by each of the number of fuse lamps 342-1, 342-2, 342-3, 342-4. This degradation can lead to deformation of 3-D objects being built by the system 330. In some examples, the degradation can be utilized to determine whether to slow the speed of the carriage 336 during a build carriage cycle, whether to increase electrical power to one or more of the number of fuse lamps 342-1, 342-2, 342-3, 342-4, and/or whether to replace one or more of the number of fuse lamps 342-1, 342-2, 342-3, 342-4.

In some examples, the system 330 can be utilized to determine a number of obstructions between the number of fuse lamps 342-1, 342-2, 342-3, 342-4 and the print bed. In some examples, the number of thermal images captured by the heat sensor 344 can be utilized to determine when there are obstructions between the number of fuse lamps 342-1, 342-2, 342-3, 342-4 and the print bed 332. For example, dust and/or building material from the print bed 332 can accumulate on the windows 343-1, 343-2 of the heat source enclosures 340-1, 340-2. In this example, the dust and/or building material can block, absorb, and/or reflect radiated energy from the number of fuse lamps 342-1, 342-2, 342-3, 342-4, which can affect the radiated energy delivered in amplitude and/or spectral distribution to the print bed 332. In some examples, the thermal images of the fuse lamps 342-1, 342-2 can be compared to the thermal images of the fuse lamps 342-3, 342-4 to determine when obstructions (e.g., dust, building material, etc.) are located on the windows 343-1, 343-2.

The system 330 can be utilized to calibrate each of the number of fuse lamps 342-1, 342-2, 342-3, 342-4 during the sacrificial layers of a 3-D print job. For example, the system 330 can calibrate the number of fuse lamps 342-1, 342-2, 342-3, 342-4 prior to building a 3-D object. The system 330 can utilize existing equipment of a 3-D printing device to calibrate each of the number of fuse lamps 342-1, 342-2, 342-3, 342-4 as described herein. In some examples, the system 330 can utilize the energy delivered to the print bed 332 via the thermal images to calibrate the number of fuse lamps 342-1, 342-2, 342-3, 342-4.

In some examples, the system 330 can be coupled to a computing device as described herein. In some examples, the computing device can utilize Equation 1 to determine a surface flux of the print bed 332.

$$T_{z=0}(t) = T_0 + \frac{Q}{h} \cdot \theta(t - t_{on}) \cdot \left(1 - e^{\left(\frac{h\sqrt{\alpha}}{k}\right)^2 \cdot (t - t_{on})} \cdot erfc\left[\left(\frac{h\sqrt{\alpha}}{k}\right) \cdot \sqrt{t - t_{on}}\right]\right)$$

$$- \frac{Q}{h} \cdot \theta(t - t_{off}) \cdot \left(1 - e^{\left(\frac{h\sqrt{\alpha}}{k}\right)^2 \cdot (t - t_{off})} \cdot erfc\left[\left(\frac{h\sqrt{\alpha}}{k}\right) \cdot \sqrt{t - t_{off}}\right]\right)$$

$$+ (T_\infty - T_0) \cdot \left(1 - e^{\left(\frac{h\sqrt{\alpha}}{k}\right)^2 \cdot t} \cdot erfc\left[\left(\frac{h\sqrt{\alpha}}{k}\right) \cdot \sqrt{t}\right]\right)$$

Equation 1

In some examples, Equation 1 can be utilized to calculate a print bed surface temperature as a function of time ($T_{z=0}(t)$) for a carriage cycle. In some examples, Equation 1 can utilize: an initial and semi-infinite boundary temperature ($T_0$),a convective boundary temperature ($T_\infty$), a surface flux ($Q$), a convective heat transfer coefficient ($h$), a density of the building material in the print bed ($p$), an effective thermal conductivity ($k$), a thermal diffusivity ($\alpha$, $k/(p \cdot c_p)$), a total time of a carriage cycle ($t$) (e.g., total time of a calibration carriage cycle, etc.), a quantity of time a heat source is on ($t_{on}$), a quantity of time a heat source is off ($t_{off}$), and/or a unit step function ($\theta(t\text{-}\ddagger)$).

By utilizing the energy delivered to the print bed 332, the degradation and/or obstructions associated with the number of fuse lamps 342-1, 342-2, 342-3, 342-4 is considered when calibrating the number of fuse lamps 342-1, 342-2, 342-3, 342-4. In some examples, calibrating the number of fuse lamps 342-1, 342-2, 342-3, 342-4 during the sacrificial layers of the 3-D print job can minimize an impact on a productivity of the system 330 by decreasing a quantity of time for calibration. Thus, the system 330 can be utilized to equalize the energy absorbed at the surface of the print bed 332 for each of the number of fuse lamps 342-1, 342-2, 342-3, 342-4, determine a degradation of each of the number of fuse lamps 342-1, 342-2, 342-3, 342-4, and/or determine when obstructions exist between the number of fuse lamps 342-1, 342-2, 342-3, 342-4 and the print bed 332.

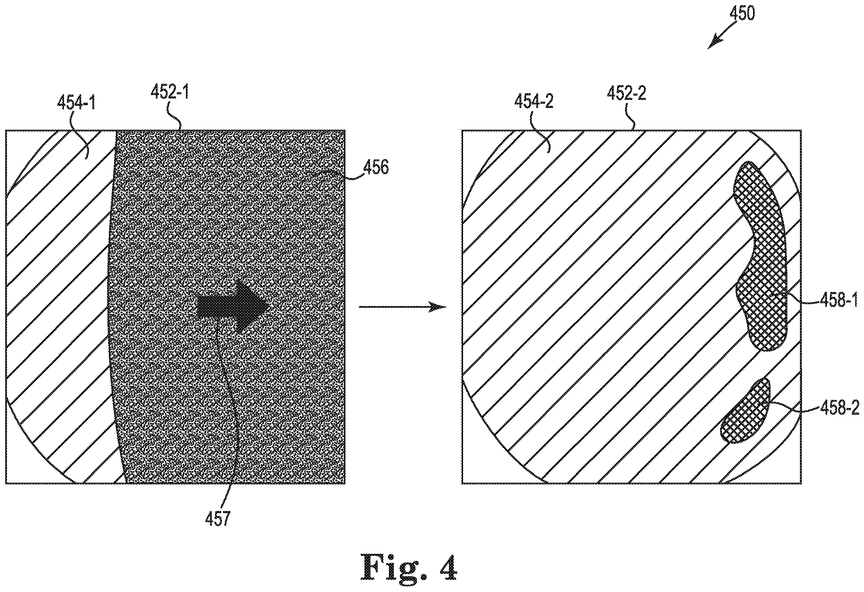

Figure 4 illustrates a diagram of an example of thermal images 452-1, 452-2 for fuse lamp calibration according to the present disclosure. In some examples, the thermal images 452-1, 452-2 can be captured by a heat sensor (e.g., heat sensor 344 as referenced in Figure 3, etc.). In some examples, the thermal images 452-1, 452-2 can be captured at different time periods of a carriage cycle (e.g., calibration carriage cycle, etc.). In some examples, the carriage can move in the direction of arrow 457 and pass over the print bed. In addition, a heat source coupled to the carriage can be activated as described herein. In some examples, the heat source that is activated can be on the side of the carriage in the direction of the arrow 457.

In some examples, the heat sensor can be positioned above the carriage and thus during particular time periods of the carriage cycle, the carriage can block a portion of the thermal images 452-1, 452-2. For example, the thermal image 452-1 can include a portion 456 that is covered by the carriage as it passes over the print bed. In some examples, the thermal images 452-1, 452-2 can display a first level of absorbed energy 454-1, 454-2 and a second level of absorbed energy 458-1, 458-2. In some examples, the first level of absorbed energy 454-1, 454-2 can be relatively lower energy compared to the second level of absorbed energy 454-1, 454-2. In some examples, the thermal images 452-1, 452-2 can be utilized to determine a surface flux of the print bed as described herein.

In some examples, determining the surface flux of the print bed can include determining a fluctuation of absorbed energy on the print bed over a period of time. For example, the thermal images 452-1, 452-2 can be utilized to monitor absorbed energy during and after the carriage cycle. In this example, the thermal images 452-1, 452-2 can be utilized to determine the energy absorbed during the carriage cycle and the energy released after the carriage cycle. As described herein, the surface flux of the print bed can be utilized calibrate each of the heat sources coupled to the carriage. In some examples, a plurality of thermal images 452-1, 452-2 can be utilized to generate a graphical representation of surface flux for a particular heat source (e.g., fuse lamp, etc.).

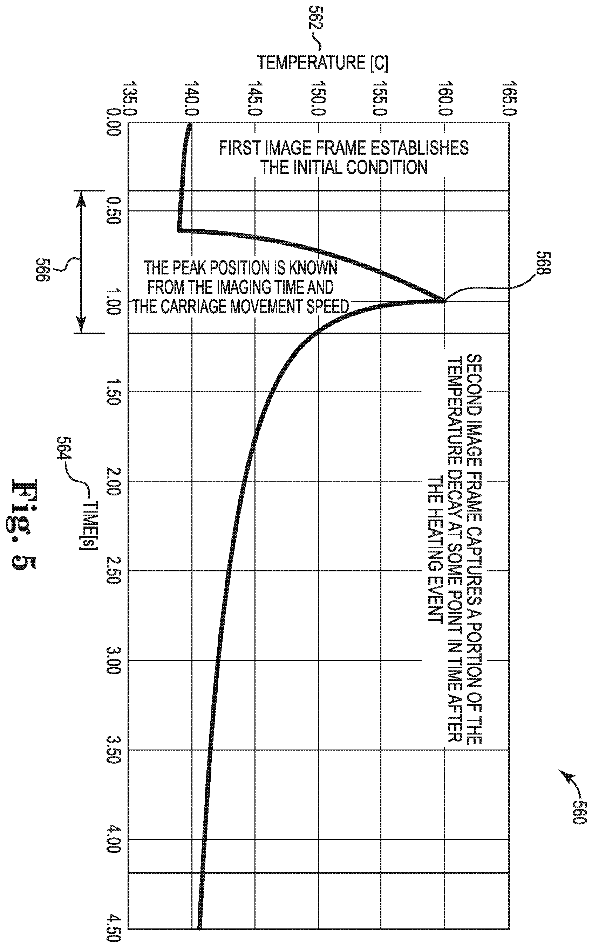

Figure 5 illustrates a diagram of an example of a graphical representation 560 of surface flux for fuse lamp calibration according to the present disclosure. In some examples, the graphical representation 560 can include an x-axis 564 representing time and a y-axis 562 representing temperature. In some examples, the graphical representation 560 can be generated utilizing a plurality of thermal images. In some examples, the graphical representation 560 can be generated for a particular portion of the print bed. For example, the print bed can be configured with a grid system to separate the print bed into a plurality of portions and the graphical representation 560 can be based on the thermal images associated with a particular portion.

In some examples, the graphical representation 560 can include a first frame between approximately zero seconds to 0.4 seconds. In some examples, the first frame can be utilized to establish an initial condition of the surface of the print bed. In some examples, the initial condition can be a temperature of the surface of the print bed prior to the carriage cycle. In some examples, the carriage cycle can be represented by frame 566. That is, the carriage can be moving over the print bed and applying radiated energy on the print bed via the number of heat sources.

In some examples, a peak 568 can be identified from the graphical representation 560. In some examples, the peak 568 can represent a peak temperature of the print bed surface from the carriage cycle. In some examples, the peak 568 can be identified based on an imaging time of the temperature reading and/or the carriage speed during the carriage cycle.

In some examples, the graphical representation 560 can include a second frame between the peak 568 and approximately 4.2 seconds. In some examples, the second frame can be utilized to determine a temperature decay after the carriage cycle. Thus, the graphical representation 560 represents the surface flux of the print bed by representing the increase and decrease of the temperature at the surface of the print bed during and after a carriage cycle.

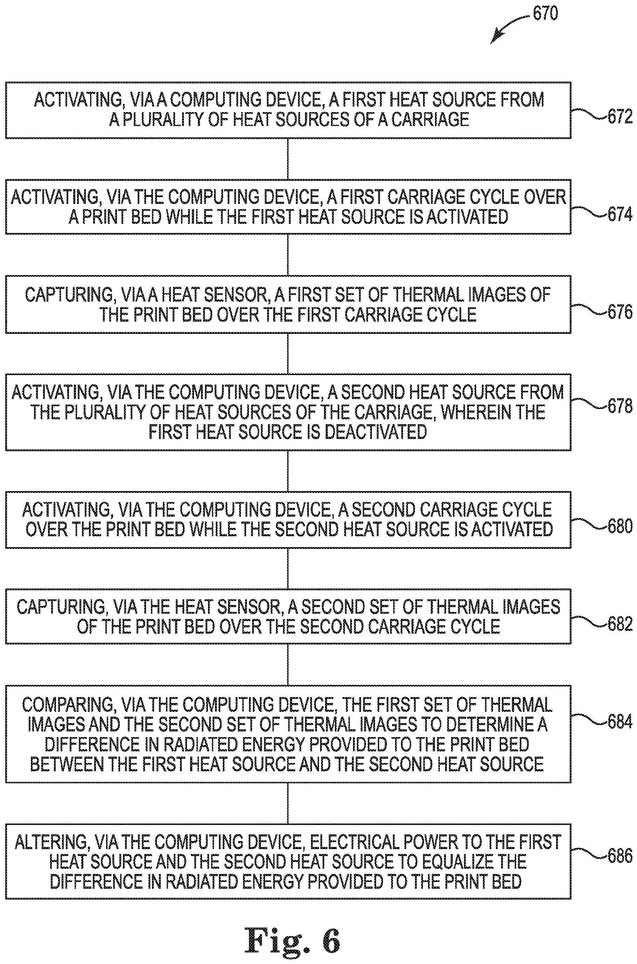

Figure 6 illustrates a flow chart of an example of a method 670 of fuse lamp calibration according to the present disclosure. In some examples, the method 670 can be executed by a computing device and/or system as described herein. For example, the method 670 can be executed by a computing device 214 as referenced in Figure 2 coupled to a system 330 as referenced in Figure 3. In some examples, the method 670 can be utilized to calibrate a number of fuse lamps during production of the sacrificial layers of the print bed. As used herein, the sacrificial layers of building material can be deposited as part of an initial process of the 3-D printer to allow the building material (e.g., powder) to go through a transient state in temperature and enter a stationary state prior to building a 3-D object as described herein.

At 672, the method 670 can include activating, via a computing device, a first heat source from a plurality of heat sources of a carriage. As described herein, activating a first heat source can include activating a fuse lamp coupled to the carriage. In some examples, activating the first heat source can include turning on the first heat source and turning off a number of other heat sources such that the first heat source is activated.

At 674, the method 670 can include activating, via the computing device, a first carriage cycle over a print bed while the first heat source is activated. In some examples, the carriage cycle can include a time period when a carriage is moved over a print bed as described herein to deposit a printing agent and/or deliver radiated energy via a number of heat sources. As described herein, the carriage cycle can move the carriage at a particular speed over the print bed and the speed of the build carriage cycle can be altered based on results of the calibration.

At 676, the method 670 can include capturing, via a heat sensor, a first set of thermal images of the print bed over the first carriage cycle. In some examples, the first set of thermal images can be thermal images captured by a heat sensor during the carriage cycle and after the carriage cycle to determine a surface flux of the print bed. In some examples, the set of thermal images can be utilized to generate a graphical representation of the surface flux (e.g., graphical representation 560 as referenced in Figure 5, etc.).

At 678, the method 670 can include activating, via the computing device, a second heat source from the plurality of heat sources of the carriage, wherein the first heat source is deactivated. In some examples, once the thermal images corresponding to the first heat source have been captured, the first heat source can be deactivated or turned off. In some examples, the second heat source can be a different heat source and/or a different fuse lamp coupled to the carriage. In some examples, the second heat source can be activated to calibrate the second heat source as described herein.

At 680, the method 670 can include activating, via the computing device, a second carriage cycle over the print bed while the second heat source is activated. Activating the second carriage cycle can include activating a carriage cycle with the same or similar carriage speed as the first carriage cycle. For example, the first carriage cycle and the second carriage cycle can be calibration carriage cycles that have the same or similar speed. In some examples, utilizing the same or similar carriage speed can allow a computing device or user to compare the energy absorbed by the surface of the print bed and/or compare the quantity of energy radiated between the first heat source and the second heat source.

At 682, the method 670 can include capturing, via the heat sensor, a second set of thermal images of the print bed over the second carriage cycle. As described herein, capturing the second set of thermal images can include utilizing a heat sensor positioned above the carriage to capture thermal images of the print bed during and after a carriage cycle. In some examples, the second set of thermal images can correspond to the energy absorbed by the print bed from the second heat source.

At 684, the method 670 can include comparing, via the computing device, the first set of thermal images and the second set of thermal images to determine a difference in radiated energy provided to the print bed between the first heat source and the second heat source. In some examples, comparing the first set of thermal images and the second set of thermal images can include comparing a graphical representation of the first set of thermal images with a graphical representation of the second set of thermal images. In some examples, data corresponding to the first set of thermal images and data corresponding to the second set of thermal images can be utilized by the computing device to calculate a bed surface temperature as a function of time (e.g., Equation 1, etc.). In some examples, the calculated bed surface temperature as a function of time can be utilized to calculate the surface flux of the print bed during the first carriage cycle and the surface flux of the print bed during the second carriage cycle. In some examples, the comparison can be utilized to equalize the energy radiated by the first heat source and the second heat source as described herein.

At 686, the method 670 can include altering, via the computing device, electrical power to the first heat source and the second heat source to equalize the difference in radiated energy provided to the print bed. In some examples, the energy radiated by the first heat source and the second heat source can be executed by altering the electrical power to the first heat source and/or the second heat source. For example, when the first heat source provides less radiated energy to the print bed, the first heat source can be provided more electrical power to increase the radiated energy provided by the first heat source. In another example, when the first heat source provides more radiated energy to the print bed, the first heat source can be provided less electrical power to decrease the radiated energy provided by the first heat source.

In some examples, the method 670 can include altering, via the computing device, a speed of the carriage based on the difference in radiated energy provided to the print bed between the first heat source and the second heat source. As described herein, the speed of the carriage can affect a quantity of radiated energy from the heat sources that is absorbed by the surface of the print bed. For example, the speed of the carriage can affect a quantity of time that a heat source is positioned over the print bed.

In some examples, the method 670 can include comparing, via the computing device, the first set of thermal images with historic thermal images corresponding to the first heat source to determine a degradation factor of the first heat source. As described herein, the thermal images that are captured by the heat sensor can be stored as historic thermal images. In some examples, the historic thermal images corresponding to a particular heat source can be compared with current thermal images for the particular heat source. In some examples, the comparison can illustrate any degradation of the particular heat source. In some cases, the degradation can be a result of a number of obstructions on a window of a heat source enclosure. For example, build material from the print bed can be stuck to the window. In this example, the degradation can result in a notification to clean the window of the obstructions. In some cases, the degradation can be a result of using or sustained utilization of the heat source. For example, fuse lamps can provide less radiated energy the more the fuse lamps are utilized. In this example, the degradation can result in replacing the heat source or fuse lamp.

The method 670 can be utilized to equalize the energy absorbed at the surface of the print bed for each of the number of fuse lamps, determine a degradation of each of the number of fuse lamps, and/or determine when obstructions exist between the number of fuse lamps and the print bed.

As used herein, "logic" is an alternative or additional processing resource to perform a particular action and/or function, etc., described herein, which includes hardware, e.g., various forms of transistor logic, application specific integrated circuits (ASICs), etc., as opposed to computer executable instructions, e.g., software firmware, etc., stored in memory and executable by a processor. Further, as used herein, "a" or "a number of" something can refer to one or more such things. For example, "a number of widgets" can refer to one or more widgets.

The figures herein follow a numbering convention in which the first digit or digits correspond to the drawing figure number and the remaining digits identify an element or component in the drawing. As will be appreciated, elements shown in the various examples herein can be added, exchanged, and/or eliminated so as to provide a number of additional examples of the present disclosure. In addition, as will be appreciated, the proportion and the relative scale of the elements provided in the figures are intended to illustrate certain examples of the present disclosure, and should not be taken in a limiting sense.

**Claims**

1. A system (100, 330) for heat source calibration of a three-dimensional (3-D) printer, comprising:

   a carriage (336) comprising a first heat source and a second heat source to apply heat over a print bed (332);
   a heat sensor (344) to capture thermal data of the print bed (332); and
   a computing device (214) coupled to the heat sensor (344), **characterized in that** the computing device (214) comprises

   a thermal image module (222) configured to receive a plurality of thermal images (452-1, 452-2) of a print bed (332) over a first period of time and a second period of time;
   a surface flux module (224) configured to determine a first surface flux of the print bed (332) for a first carriage cycle using the first heat source and a second surface flux of the print bed (332) for a second carriage cycle using the second heat source, wherein the first carriage cycle is within the first period of time and the second carriage cycle is within the second period of time;
   a comparison module (226) configured to compare the first surface flux to the second surface flux to determine a difference in radiated energy provided to the print bed (332) between the first heat source and the second heat source.

2. The system (100, 330) of claim 1, wherein the surface flux corresponds to a quantity of heat received on a surface of the print bed (332) over a period of time.

3. The system (100, 330) of claim 1, wherein the computing device (214) determines a thermal behavior of the heat source.

4. The system (100, 330) of claim 1, wherein the print bed (332) comprises a substantially homogenous color across a surface of the print bed (332).

5. The system (100, 330) of claim 1, wherein the print bed (332) comprises a calibration plate.

6. The system (100, 330) of claim 5, wherein the calibration plate comprises a plurality of colors across a surface of the print bed (332).

7. A non-transitory computer readable medium storing instructions executable by a processing resource (216) to cause the system of claim 1 to carry out the following method:

   receive a plurality of thermal images (452-1, 452-2) of a print bed (332) over a first period of time and a second period of time;
   determine a first surface flux of the print bed (332) for a first carriage cycle using a first heat source and a second surface flux of the print bed (332) for a second carriage cycle using a second heat source, wherein the first carriage cycle is within the first period of time and the second carriage cycle is within the second period of time; and
   compare the first surface flux to the second surface flux to determine a difference in radiated energy provided to the print bed (332) between the first heat source and the second heat source.

8. The non-transitory computer readable medium of claim 7, comprising instructions to alter electrical power to the first heat source and the second heat source to equalize the difference in radiated energy provided to the print bed (332) between the first heat source and the second heat source.

9. The non-transitory computer readable medium of claim 7, comprising instructions to determine a power degradation of the first heat source and the second heat source based on the plurality of thermal images (452-1, 452-2).

10. The non-transitory computer readable medium of claim 7, comprising instructions to determine when the difference in radiated energy provided to the print bed (332) is within a calibration threshold.

11. The non-transitory computer readable medium of claim 10, comprising instructions to alter a speed of a build carriage cycle when the difference in radiated energy provided to the print bed (332) is outside a calibration threshold.

12. The non-transitory computer readable medium of claim 7, comprising instructions to determine a number of obstruc-

EP 3 390 012 B1

tions between the first heat source based on the plurality of thermal images (452-1, 452-2) of the print bed (332).

13. A method of heat source calibration for a three-dimensional (3-D) printer, comprising:

activating, via a computing device (214), a first heat source from a plurality of heat sources of a carriage (336);
activating, via the computing device (214), a first carriage cycle over a print bed (332) while the first heat source is activated;
capturing, via a heat sensor (344), a first set of thermal images (452-1, 452-2) of the print bed (332) over the first carriage cycle;
activating, via the computing device (214), a second heat source from the plurality of heat sources of the carriage (336), wherein the first heat source is deactivated;
activating, via the computing device (214), a second carriage cycle over the print bed (332) while the second heat source is activated;
capturing, via the heat sensor (344), a second set of thermal images (452-1, 452-2) of the print bed (332) over the second carriage (336) cycle;
comparing, via the computing device (214), the first set of thermal images (452-1, 452-2) and the second set of thermal images (452-1, 452-2) to determine a difference in radiated energy provided to the print bed (332) between the first heat source and the second heat source; and
altering, via the computing device (214), electrical power to the first heat source and the second heat source to equalize the difference in radiated energy provided to the print bed (332).

14. The method of claim 13, comprising altering, via the computing device (214), a speed of the carriage (336) during a build carriage cycle based on the difference in radiated energy provided to the print bed (332) between the first heat source and the second heat source.

15. The method of claim 13, comprising, comparing, via the computing device (214), the first set of thermal images (452-1, 452-2) with historic thermal images (452-1, 452-2) corresponding to the first heat source to determine a degradation factor of the first heat source.

**Patentansprüche**

1. System (100, 330) zur Wärmequellenkalibrierung eines dreidimensionalen (3D)-Druckers, umfassend:

einen Wagen (336), der eine erste Wärmequelle und eine zweite Wärmequelle zum Aufbringen von Wärme über einem Druckbett (332) umfasst;
einen Wärmesensor (344) zum Erfassen thermischer Daten des Druckbetts (332); und
ein Computergerät (214), das mit dem Wärmesensor (344) gekoppelt ist, **dadurch gekennzeichnet, dass** das Computergerät (214) ein Wärmebildmodul (222) umfasst, das konfiguriert ist, um mehrere Wärmebilder (452-1, 452-2) eines Druckbetts (332) über eine erste Zeitspanne und eine zweite Zeitspanne zu empfangen;
ein Oberflächenflussmodul (224), das konfiguriert ist, um einen ersten Oberflächenfluss des Druckbetts (332) für einen ersten Wagenzyklus unter Verwendung der ersten Wärmequelle und einen zweiten Oberflächenfluss des Druckbetts (332) für einen zweiten Wagenzyklus unter Verwendung der zweiten Wärmequelle zu bestimmen, wobei der erste Wagenzyklus innerhalb der ersten Zeitspanne und der zweite Wagenzyklus innerhalb der zweiten Zeitspanne liegt;
ein Vergleichsmodul (226), das konfiguriert ist, um den ersten Oberflächenfluss mit dem zweiten Oberflächenfluss zu vergleichen, um eine Differenz in der an das Druckbett (332) gelieferten Strahlungsenergie zwischen der ersten Wärmequelle und der zweiten Wärmequelle zu bestimmen.

2. System (100, 330) nach Anspruch 1, wobei der Oberflächenfluss einer Wärmemenge entspricht, die auf einer Oberfläche des Druckbetts (332) über einen Zeitraum empfangen wird.

3. System (100, 330) nach Anspruch 1, wobei ein Computergerät (214) ein thermisches Verhalten der Wärmequelle bestimmt.

4. System (100, 330) nach Anspruch 1, wobei das Druckbett (332) eine im Wesentlichen homogene Farbe auf einer Oberfläche des Druckbetts (332) aufweist.

**5.** System (100, 330) nach Anspruch 1, wobei das Druckbett (332) eine Kalibrierplatte umfasst.

**6.** System (100, 330) nach Anspruch 5, wobei die Kalibrierplatte mehrere Farben auf einer Oberfläche des Druckbetts (332) umfasst.

**7.** Nicht-flüchtiges computerlesbares Medium, das Anweisungen speichert, die von einer Verarbeitungsressource (216) ausführbar sind, um das System nach Anspruch 1 zu veranlassen, das folgende Verfahren auszuführen:

Empfangen mehrerer Wärmebilder (452-1,452-2) eines Druckbetts (332) über eine erste Zeitspanne und eine zweite Zeitspanne;
Bestimmen eines ersten Oberflächenflusses des Druckbetts (332) für einen ersten Wagenzyklus unter Verwendung einer ersten Wärmequelle und eines zweiten Oberflächenflusses des Druckbetts (332) für einen zweiten Wagenzyklus unter Verwendung einer zweiten Wärmequelle, wobei der erste Wagenzyklus innerhalb der ersten Zeitspanne und der zweite Wagenzyklus innerhalb der zweiten Zeitspanne liegt; und
Vergleichen des ersten Oberflächenflusses mit dem zweiten Oberflächenfluss, um eine Differenz in der an das Druckbett (332) gelieferten Strahlungsenergie zwischen der ersten Wärmequelle und der zweiten Wärmequelle zu bestimmen.

**8.** Nicht-flüchtiges computerlesbares Medium nach Anspruch 7, das Anweisungen zum Ändern der elektrischen Leistung für die erste Wärmequelle und die zweite Wärmequelle umfasst, um die Differenz der dem Druckbett (332) zugeführten Strahlungsenergie zwischen der ersten Wärmequelle und der zweiten Wärmequelle auszugleichen.

**9.** Nicht-flüchtiges computerlesbares Medium nach Anspruch 7, das Anweisungen zum Bestimmen einer Leistungsverschlechterung der ersten Wärmequelle und der zweiten Wärmequelle auf der Grundlage der mehreren Wärmebilder (452-1,452-2) umfasst.

**10.** Nicht-flüchtiges computerlesbares Medium nach Anspruch 7, das Anweisungen zum Bestimmen, wann die Differenz der an das Druckbett (332) gelieferten Strahlungsenergie innerhalb eines Kalibrierungsschwellenwertes liegt, umfasst.

**11.** Nicht-flüchtiges computerlesbares Medium nach Anspruch 10, das Anweisungen zum Ändern der Geschwindigkeit eines Bauwagenzyklus, wenn die Differenz der dem Druckbett (332) zugeführten Strahlungsenergie außerhalb einer Kalibrierungsschwelle liegt, umfasst.

**12.** Nicht-flüchtiges computerlesbares Medium nach Anspruch 7, das Anweisungen zum Bestimmen einer Anzahl von Hindernissen zwischen der ersten Wärmequelle auf der Grundlage der mehreren Wärmebilder (452-1,452-2) des Druckbetts (332) umfasst.

**13.** Verfahren zur Wärmequellenkalibrierung für einen dreidimensionalen (3D)-Drucker, Folgendes umfassend:

Aktivieren, über ein Computergerät (214), einer ersten Wärmequelle aus mehreren Wärmequellen eines Wagens (336);
Aktivieren, über das Computergerät (214), eines ersten Wagenzyklus über einem Druckbett (332), während die erste Wärmequelle aktiviert ist;
Erfassen, über einen Wärmesensor (344), eines ersten Satzes von Wärmebildern (452-1,452-2) des Druckbettes (332) über dem ersten Wagenzyklus;
Aktivieren, über das Computergerät (214), einer zweiten Wärmequelle aus den mehreren Wärmequellen des Wagens (336), wobei die erste Wärmequelle deaktiviert ist;
Aktivieren, über das Computergerät (214), eines zweiten Wagenzyklus über dem Druckbett (332), während die zweite Wärmequelle aktiviert ist;
Erfassen, über den Wärmesensor (344), eines zweiten Satzes von Wärmebildern (452-1, 452-2) des Druckbettes (332) über dem zweiten Wagenzyklus (336);
Vergleichen, über das Computergerät (214), des ersten Satzes von Wärmebildern (452-1, 452-2) und des zweiten Satzes von Wärmebildern (452-1, 452-2) zum Bestimmen einer Differenz der dem Druckbett (332) zugeführten Strahlungsenergie zwischen der ersten Wärmequelle und der zweiten Wärmequelle; und
Ändern, über das Computergerät (214), der elektrischen Leistung für die erste Wärmequelle und die zweite Wärmequelle, um die Differenz der dem Druckbett (332) zugeführten Strahlungsenergie auszugleichen.

**14.** Verfahren nach Anspruch 13, welches ein Ändern, über das Computergerät (214), einer Geschwindigkeit des Wagens (336) während eines Bauwagenzyklus, basierend auf der Differenz der an das Druckbett (332) gelieferten Strahlungsenergie zwischen der ersten Wärmequelle und der zweiten Wärmequelle, umfasst.

**15.** Verfahren nach Anspruch 13, welches ein Vergleichen, über das Computergerät (214), des ersten Satzes von Wärmebildern (452-1, 452-2) mit historischen Wärmebildern (452-1, 452-2) umfasst, die der ersten Wärmequelle entsprechen, um einen Verschlechterungsfaktor der ersten Wärmequelle zu bestimmen.

**Revendications**

**1.** Système (100, 330) d'étalonnage de source de chaleur d'une imprimante tridimensionnelle (3-D), comprenant :

un chariot (336) comprenant une première source de chaleur et une seconde source de chaleur destinées à appliquer de la chaleur sur un lit d'impression (332) ;
un capteur de chaleur (344) destiné à capturer des données thermiques du lit d'impression (332) ; et
un dispositif informatique (214) couplé au capteur thermique (344), **caractérisé en ce que** le dispositif informatique (214) comprend un module d'image thermique (222) configuré pour recevoir une pluralité d'images thermiques (452-1, 452-2) d'un lit d'impression (332) pendant une première période de temps et une seconde période de temps ;
un module de flux de surface (224) configuré pour déterminer un premier flux de surface du lit d'impression (332) pour un premier cycle de chariot en utilisant la première source de chaleur, et un second flux de surface du lit d'impression (332) pour un second cycle de chariot en utilisant la seconde source de chaleur, le premier cycle de chariot se trouvant dans la première période de temps et le second cycle de chariot se trouvant dans la seconde période de temps ;
un module de comparaison (226) configuré pour comparer le premier flux de surface au second flux de surface afin de déterminer une différence d'énergie diffusée fournie au lit d'impression (332) entre la première source de chaleur et la seconde source de chaleur.

**2.** Système (100, 330) selon la revendication 1, dans lequel le flux de surface correspond à une quantité de chaleur reçue sur une surface du lit d'impression (332) pendant une période de temps.

**3.** Système (100, 330) selon la revendication 1, dans lequel le dispositif informatique (214) détermine un comportement thermique de la source de chaleur.

**4.** Système (100, 330) selon la revendication 1, dans lequel le lit d'impression (332) comprend une couleur sensiblement homogène sur une surface du lit d'impression (332).

**5.** Système (100, 330) selon la revendication 1, dans lequel le lit d'impression (332) comprend une plaque d'étalonnage.

**6.** Système (100, 330) selon la revendication 5, dans lequel la plaque d'étalonnage comprend une pluralité de couleurs sur une surface du lit d'impression (332).

**7.** Support non transitoire lisible par ordinateur, stockant des instructions exécutables par une ressource de traitement (216) pour amener le système selon la revendication 1 à exécuter le procédé suivant :

la réception d'une pluralité d'images thermiques (452-1, 452-2) d'un lit d'impression (332) pendant une première période de temps et une seconde période de temps ;
la détermination d'un premier flux de surface du lit d'impression (332) pour un premier cycle de chariot en utilisant une première source de chaleur, et d'un second flux de surface du lit d'impression (332) pour un second cycle de chariot en utilisant une seconde source de chaleur, le premier cycle de chariot se trouvant dans la première période de temps et le second cycle de chariot se trouvant dans la seconde période de temps ; et
la comparaison du premier flux de surface au second flux de surface afin de déterminer une différence d'énergie diffusée fournie au lit d'impression (332) entre la première source de chaleur et la seconde source de chaleur.

**8.** Support non transitoire lisible par ordinateur selon la revendication 7, comprenant des instructions permettant de modifier l'alimentation électrique de la première source de chaleur et de la seconde source de chaleur afin d'égaliser la différence d'énergie diffusée fournie au lit d'impression (332) entre la première source de chaleur et la seconde source de chaleur.

9. Support non transitoire lisible par ordinateur selon la revendication 7, comprenant des instructions permettant de déterminer une dégradation d'alimentation de la première source de chaleur et de la seconde source de chaleur sur la base de la pluralité d'images thermiques (452-1, 452-2).

10. Support non transitoire lisible par ordinateur selon la revendication 7, comprenant des instructions permettant de déterminer quand la différence d'énergie diffusée fournie au lit d'impression (332) se situe à l'intérieur d'un seuil d'étalonnage.

11. Support non transitoire lisible par ordinateur selon la revendication 10, comprenant des instructions permettant de modifier la vitesse d'un cycle de chariot de fabrication lorsque la différence d'énergie diffusée fournie au lit d'impression (332) est en dehors d'un seuil d'étalonnage.

12. Support non transitoire lisible par ordinateur selon la revendication 7, comprenant des instructions permettant de déterminer un certain nombre d'obstructions entre la première source de chaleur sur la base de la pluralité d'images thermiques (452-1, 452-2) du lit d'impression (332).

13. Procédé d'étalonnage de source de chaleur pour une imprimante tridimensionnelle (3-D), comprenant :

l'activation, par l'intermédiaire d'un dispositif informatique (214), d'une première source de chaleur à partir d'une pluralité de sources de chaleur d'un chariot (336) ;
l'activation, par l'intermédiaire d'un dispositif informatique (214), d'un premier cycle de chariot sur un lit d'impression (332) pendant que la première source de chaleur est activée ;
la capture, par l'intermédiaire d'un capteur de chaleur (344), d'un premier ensemble d'images thermiques (452-1, 452-2) du lit d'impression (332) pendant le premier cycle de chariot ;
l'activation, par l'intermédiaire d'un dispositif informatique (214), d'une seconde source de chaleur à partir de la pluralité de sources de chaleur du chariot (336), la première source de chaleur étant désactivée ;
l'activation, par l'intermédiaire d'un dispositif informatique (214), d'un second cycle de chariot sur le lit d'impression (332) pendant que la seconde source de chaleur est activée ;
la capture, par l'intermédiaire du capteur de chaleur (344), d'un second ensemble d'images thermiques (452-1, 452-2) du lit d'impression (332) pendant le second cycle de chariot (336) ;
la comparaison, par l'intermédiaire du dispositif informatique (214), du premier ensemble d'images thermiques (452-1, 452-2) et du second ensemble d'images thermiques (452-1, 452-2) afin de déterminer une différence d'énergie diffusée fournie au lit d'impression (332) entre la première source de chaleur et la seconde source de chaleur ; et
la modification, par l'intermédiaire du dispositif informatique (214), de l'alimentation électrique de la première source de chaleur et de la seconde source de chaleur afin d'égaliser la différence d'énergie diffusée fournie au lit d'impression (332).

14. Procédé selon la revendication 13, comprenant la modification, par l'intermédiaire du dispositif informatique (214), d'une vitesse du chariot (336) pendant un cycle de chariot de fabrication sur la base de la différence d'énergie diffusée fournie au lit d'impression (332) entre la première source de chaleur et la seconde source de chaleur.

15. Procédé selon la revendication 13, comprenant la comparaison, par l'intermédiaire du dispositif informatique (214), du premier ensemble d'images thermiques (452-1, 452-2) à des images thermiques historiques (452-1, 452-2) correspondant à la première source de chaleur, afin de déterminer un facteur de dégradation de la première source de chaleur.

~100

┌─────────────────────────────┐ ~102
│                             │
│   ┌─────────────────────┐   │
│   │  THERMAL IMAGE      │───┼─ ~106
│   │  ENGINE             │   │
│   └─────────────────────┘   │
│                             │
│   ┌─────────────────────┐   │
│   │  SURFACE FLUX       │───┼─ ~108
│   │  ENGINE             │   │
│   └─────────────────────┘   │
│                             │
│   ┌─────────────────────┐   │
│   │  COMPARISON         │───┼─ ~110
│   │  ENGINE             │   │
│   └─────────────────────┘   │
└─────────────────────────────┘

104

DATABASE

# Fig. 1

PROCESSING
RESOURCE ~216

~214

~218

MEMORY RESOURCE ~220

THERMAL IMAGE
MODULE ~222

SURFACE FLUX
MODULE ~224

COMPARISON
MODULE ~226

# Fig. 2

Fig. 3

Fig. 4

**Fig. 5**

670

ACTIVATING, VIA A COMPUTING DEVICE, A FIRST HEAT SOURCE FROM A PLURALITY OF HEAT SOURCES OF A CARRIAGE — 672

ACTIVATING, VIA THE COMPUTING DEVICE, A FIRST CARRIAGE CYCLE OVER A PRINT BED WHILE THE FIRST HEAT SOURCE IS ACTIVATED — 674

CAPTURING, VIA A HEAT SENSOR, A FIRST SET OF THERMAL IMAGES OF THE PRINT BED OVER THE FIRST CARRIAGE CYCLE — 676

ACTIVATING, VIA THE COMPUTING DEVICE, A SECOND HEAT SOURCE FROM THE PLURALITY OF HEAT SOURCES OF THE CARRIAGE, WHEREIN THE FIRST HEAT SOURCE IS DEACTIVATED — 678

ACTIVATING, VIA THE COMPUTING DEVICE, A SECOND CARRIAGE CYCLE OVER THE PRINT BED WHILE THE SECOND HEAT SOURCE IS ACTIVATED — 680

CAPTURING, VIA THE HEAT SENSOR, A SECOND SET OF THERMAL IMAGES OF THE PRINT BED OVER THE SECOND CARRIAGE CYCLE — 682

COMPARING, VIA THE COMPUTING DEVICE, THE FIRST SET OF THERMAL IMAGES AND THE SECOND SET OF THERMAL IMAGES TO DETERMINE A DIFFERENCE IN RADIATED ENERGY PROVIDED TO THE PRINT BED BETWEEN THE FIRST HEAT SOURCE AND THE SECOND HEAT SOURCE — 684

ALTERING, VIA THE COMPUTING DEVICE, ELECTRICAL POWER TO THE FIRST HEAT SOURCE AND THE SECOND HEAT SOURCE TO EQUALIZE THE DIFFERENCE IN RADIATED ENERGY PROVIDED TO THE PRINT BED — 686

**Fig. 6**

**EP 3 390 012 B1**

**REFERENCES CITED IN THE DESCRIPTION**

**Patent documents cited in the description**

- US 2008262659 A1

- WO 2015155745 A1